# EUROPÄISCHE PATENTSCHRIFT

(11) **EP 3 293 389 B1**
(45) Veröffentlichungstag und Bekanntmachung des Hinweises auf die Patenterteilung: **24.02.2021**
(21) Anmeldenummer: 17187938.0
(22) Anmeldetag: 25.08.2017
(51) Int. Cl.: F02K 9/86, F02K 9/97

(54) **TRIEBWERKVORRICHTUNG EINES RAKETENTRIEBWERKS**
ENGINE DEVICE OF A ROCKET ENGINE
DISPOSITIF MOTOPROPULSEUR D'UNE FUSÉE

(30) Priorität: 08.09.2016 DE 102016217104
(43) Veröffentlichungstag der Anmeldung: 14.03.2018
(73) Patentinhaber: MBDA Deutschland GmbH, 86529 Schrobenhausen (DE)
(72) Erfinder: METSKER, Yuriy, 85748 Garching (DE); EHLEN, Johannes, 40489 Düsseldorf (DE); STERN, Dirk, 80807 München (DE); GERNERT, Heribert, 85579 Neubiberg (DE)
(74) Vertreter: Isarpatent

(56) Entgegenhaltungen:
- US-B1- 6 227 247

## Beschreibung

Die vorliegende Erfindung betrifft eine Triebwerkvorrichtung eines Raketentriebwerks.

Zur Raketenabwehr werden Abfangflugkörper mit den zu zerstörenden ballistischen Zielen zur Kollision gebracht, wobei die kinetische Energie, welche bei dem Zusammenstoß umgewandelt wird, das Ziel zerstört. Die Ziele selbst bewegen sich jedoch mit hohen Geschwindigkeiten und auf nur bedingt vorhersehbaren Flugbahnen, sodass eine hochagile Steuerung der Abfangflugkörper essentiell ist.

Hierzu werden üblicherweise reaktive Querschub- und Lageregelungssysteme eingesetzt. Diese Systeme können durch diskrete Schubimpulse betrieben werden, wobei die Triebwerke an- bzw. ausgeschaltet werden. In diesem Fall wird der Schub lediglich zur Kurskorrektur eingesetzt. Darüber hinaus stehen kontinuierliche Schubsteuerungen zur Verfügung, welche eine genaue Einstellung des Schubes erlauben.

Eine Möglichkeit, den Schub zu regulieren, besteht darin, eine Düsennadel, das heißt einen länglichen Körper, in eine Düsenöffnung hineinzuschieben bzw. aus dieser herauszuschieben. Hierdurch wird der effektive Querschnitt der Düse, das heißt der für das ausströmende Gas verfügbare Anteil des Querschnitts, verringert und dadurch der Schub verändert. Aus der Druckschrift US 6 986 246 B2 ist eine derartige Triebwerkvorrichtung bekannt, wobei die Düsennadel mechanisch in axialer Richtung verschoben wird.

Die US 6 227 247 B1 beschreibt ein Triebwerksventil mit einem zwischen einer geschlossenen und einer maximal offenen Position kontinuierlich positionierbaren Kolben. Der Kolben bewegt sich als Reaktion auf die Druckdifferenz zwischen dem Druck im Zwischenring und dem Druck hinter dem Kolben. Ein schwenkbares Klappenventil regelt diese Druckdifferenz. Wenn eine Änderung der Schubkraft erforderlich ist, wird die Position der Prallplatte geändert, was eine Änderung dieser Druckdifferenz bewirkt, die den Kolben so lange bewegt, bis das gewünschte Schubniveau erreicht ist.
Es ist eine Aufgabe der Erfindung, eine verbesserte Schubeinstellung zu ermöglichen.

Diese Aufgabe wird durch eine Triebwerkvorrichtung mit den Merkmalen des Patentanspruchs 1 gelöst. Vorteilhafte Ausführungsformen der Erfindung sind Gegenstand der abhängigen Patentansprüche.

Die Erfindung betrifft demnach eine Triebwerkvorrichtung eines Raketentriebwerks, welche eine Nachbrennkammer umfasst, die eine Gaseinlassöffnung zum Einströmen eines Gases in die Nachbrennkammer aufweist, sowie eine Gasauslassöffnung bzw. Düse aufweist, welche zum Ausströmen des Gases aus der Nachbrennkammer ausgebildet ist. Die Triebwerkvorrichtung umfasst weiter eine mit Gas befüllbare Ausgleichskammer und eine mit Gas befüllbare Steuerkammer. Eine Düsennadel ist in axial verschiebbarer Weise derart angeordnet, dass ein erster Endbereich der Düsennadel zumindest teilweise in die Gasauslassöffnung einführbar ist. Ein zweiter Endbereich der Düsennadel weist eine Kolbeneinrichtung auf, wobei ein erster Abschnitt der Kolbeneinrichtung in der Ausgleichskammer angeordnet ist und durch ein in der Ausgleichskammer befindliches Gas mit Druck derart beaufschlagbar ist, dass die Düsennadel eine axiale Kraft in Richtung der Gasauslassöffnung erfährt. Ein zweiter Abschnitt der Kolbeneinrichtung ist in der Steuerkammer angeordnet und durch Einfüllen eines Gases in die Steuerkammer mit Druck derart beaufschlagbar, dass die Düsennadel eine axiale Kraft in Richtung von der Gasauslassöffnung weg erfährt. Die Nachbrennkammer ist von der Steuerkammer durch einen Schott getrennt. Die Steuerkammer weist eine Gasöffnung auf, über welche Gas in die Steuerkammer einleitbar bzw. ausleitbar ist. Die Kolbeneinrichtung ist in einer zwischen der Steuerkammer und der Ausgleichskammer angeordneten Zwischenkammer verschiebbar, wobei die Zwischenkammer fluidisch mit einer Umgebungsluft verbunden ist.

In Abhängigkeit von den Gasdruckverhältnissen in den drei Kammern, das heißt der Ausgleichskammer, der Steuerkammer und der Nachbrennkammer, werden jeweilige axiale Kräfte auf die Düsennadel ausgeübt. Durch Einstellen der Drücke kann daher die Position der Düsennadel genau eingestellt werden. Durch die pneumatische Steuerung wird eine sehr kurze Stellzeit erreicht, so dass der effektive Querschnitt der Gasauslassöffnung der Nachbrennkammer extrem schnell variiert werden kann. Dadurch kann der Schub der Triebwerkvorrichtung präzise eingestellt werden.

Gemäß einer bevorzugten Ausführungsform weist die Triebwerkvorrichtung eine Steuereinrichtung auf, die dazu ausgebildet ist, eine axiale Position der Düsennadel durch Verändern eines Gasdrucks eines in der Steuerkammer befindlichen Gases einzustellen. Durch Veränderung des Gasdrucks wird die axiale Kraft auf die Düsennadel verändert, so dass die Position der Düsennadel und damit auch der effektive Querschnitt der Gasauslassöffnung exakt eingestellt werden können.

Gemäß einer bevorzugten Weiterbildung der Triebwerkvorrichtung ist die Steuereinrichtung darüber hinaus dazu ausgebildet, einen Gasdruck eines Gases in der Ausgleichskammer einzustellen. Dadurch kann sowohl die axiale Kraft auf die Düsennadel in Richtung der Gasauslassöffnung als auch von der Gasauslassöffnung weg eingestellt werden.

Gemäß einer bevorzugten Ausführungsform weist die Triebwerkvorrichtung eine Sensoreinrichtung auf, die dazu ausgebildet ist, eine axiale Position der Düsennadel zu messen. Anhand der gemessenen Position kann beispielsweise die Steuereinrichtung den Gasdruck des Gases in der Steuerkammer und/oder Ausgleichskammer derart einstellen, dass die Düsennadel in eine vorgegebene axiale Position verschoben wird.

Gemäß einer bevorzugten Weiterbildung der Triebwerkvorrichtung ist die Nachbrennkammer mit der Ausgleichskammer fluidisch verbunden. Somit entspricht der Druck in der Nachbrennkammer im Wesentlichen dem Druck in der Ausgleichskammer, abgesehen von dynamischen Fluktuationen aufgrund der Verschiebung der Düsennadel sowie der Strömungsverluste durch ein Überströmen von Gasmengen. Vorzugsweise ist die Nachbrennkammer hierbei derart ausgelegt, dass in dem Fall, in welchem die Steuerkammer gelüftet, das heißt nicht mit einem Gas beaufschlagt ist, eine axiale Kraft auf die Düsennadel in Richtung der Gasauslassöffnung größer ist als eine aufgrund der Strömung des Gases in der Nachbrennkammer auf die Düsennadel ausgeübte axiale Kraft von der Gasauslassöffnung weg. Die Steuerkammer dient dazu, eine Gegenkraft aufzubauen, welche die Düsennadel von der Gasauslassöffnung weg verschiebt. Da hierzu nur die Druckdifferenz erforderlich ist, wird die Düsennadel bereits durch Beaufschlagen mit geringem Gasdruck axial verschoben, so dass eine geringe Änderung des Gasdruckes zur Einstellung der exakten axialen Position der Düsennadel ausreicht. Dadurch wird die Stellzeit sehr kurz gehalten.

Gemäß einer bevorzugten Ausführungsform der Triebwerkvorrichtung ist die Steuerkammer in axialer Richtung zwischen der Ausgleichskammer und der Nachbrennkammer angeordnet. Die axiale Richtung entspricht hierbei der axialen Verschiebungsrichtung der Düsennadel.

Gemäß einer Weiterbildung der Triebwerkvorrichtung sind die Ausgleichskammer und/oder die Nachbrennkammer symmetrisch um eine axiale Verschiebungsachse der Düsennadel herum angeordnet.

Gemäß einer Weiterbildung der Triebwerkvorrichtung ist die Gasauslassöffnung durch Einführen der Düsennadel vollständig verschließbar. Der von der Triebwerkvorrichtung bereitgestellte Schub kann somit kontinuierlich zwischen Null und einem maximalen vorgegebenen Wert variiert werden, wobei der maximale Wert einer Position entspricht, in welcher die Düsennadel vollständig aus der Gasauslassöffnung heraus verschoben ist.

Im Folgenden wird die Erfindung unter Bezugnahme auf die Figuren der Zeichnungen erläutert. Von den Figuren zeigen:
- Fig. 1: eine schematische Seitenansicht einer Triebwerkvorrichtung gemäß einer Ausführungsform der Erfindung;
- Fig. 2: eine schematische Rückansicht der in Fig. 1 gezeigten Triebwerkvorrichtung;
- Fig. 3: eine schematische Querschnittsansicht der Triebwerkvorrichtung, welche sich bei einem Schnitt entlang der in Fig. 1 gezeigten Achse A-A ergibt;
- Fig. 4: eine schematische Querschnittsansicht der Triebwerkvorrichtung, welche sich bei einem Schnitt entlang der in Fig. 2 gezeigten Achse B-B ergibt; und
- Fig. 5: eine schematische Querschnittsansicht der Triebwerkvorrichtung, welche sich bei einem Schnitt entlang der in Fig. 2 gezeigten Achse C-C ergibt.

Sofern sinnvoll lassen sich die beschriebenen Ausgestaltungen und Weiterbildungen beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Gleiche Bezugszeichen bezeichnen dabei gleiche oder ähnlich wirkende Komponenten.

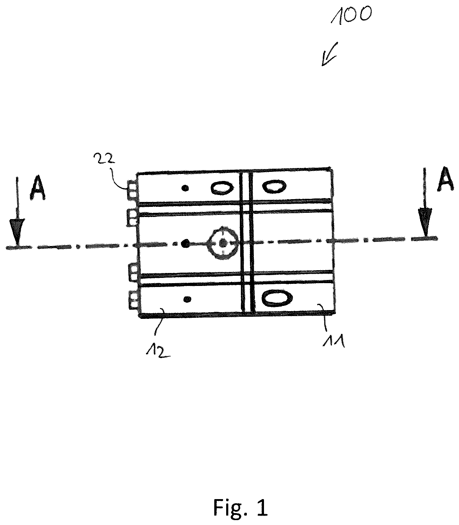

In Figur 1 ist eine schematische Seitenansicht einer Triebwerkvorrichtung 100 gezeigt, welche ein Gehäuse mit einem vorderen Gehäuseabschnitt 11 und einem hinteren Gehäuseabschnitt 12 aufweist.

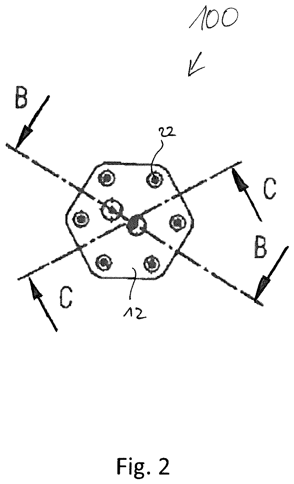

Figur 2 zeigt eine Rückansicht der in Figur 1 gezeigten Triebwerkvorrichtung.

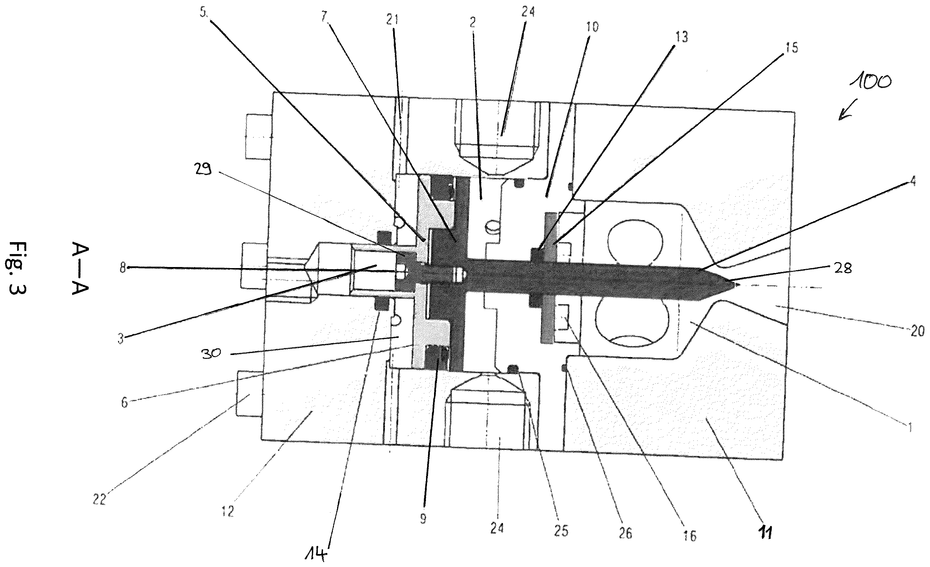

In Figur 3 ist eine Querschnittsansicht der Triebwerkvorrichtung 100 entlang der in Figur 1 eingezeichneten Achse A-A illustriert.

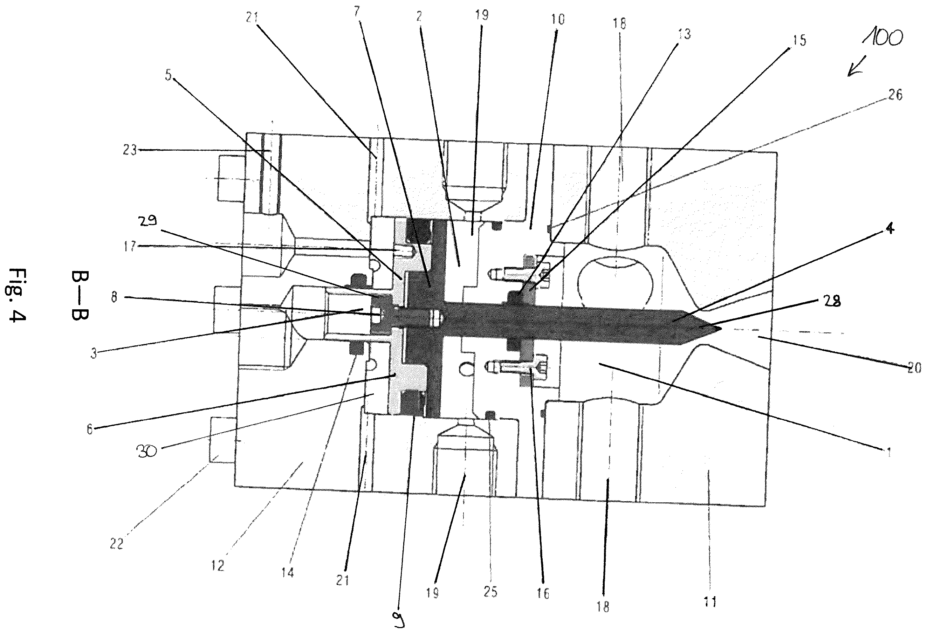

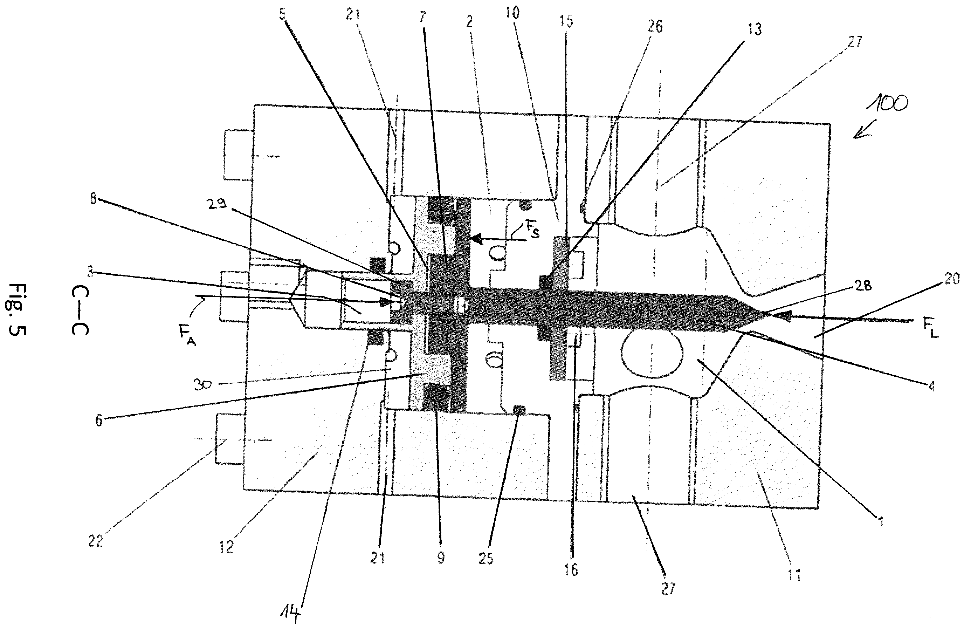

Figur 4 zeigt die Triebwerkvorrichtung in einer schematischen Querschnittsansicht entlang der Achse B-B der Figur 2 und Figur 5 entlang der Achse C-C der Figur 2.

Die Triebwerkvorrichtung 100 weist eine Nachbrennkammer 1 auf, welche über Gaseinlassöffnungen 27 mit einem Gasreservoir oder einem Gasgenerator verbunden ist. Das Gasreservoir oder der Gasgenerator leitet Gas in die Nachbrennkammer 1 ein, welches durch eine Gasauslassöffnung bzw. Triebwerksdüse 20 beschleunigt und aus der Nachbrennkammer 1 ausgeleitet wird. Das ausgeleitete Gas erzeugt einen Schub, über welchen die Flugrichtung eines die Triebwerkvorrichtung aufweisenden Flugkörpers verändert werden kann.

Die Variation des Schubs erfolgt hierbei über eine Änderung eines effektiven Querschnitts der Gasauslassöffnung 20. Hierzu ist eine Düsennadel 4 axial verschiebbar in der Triebwerkvorrichtung 100 angeordnet, wobei ein erster Endbereich 28 der Düsennadel 4 zumindest teilweise in die Gasauslassöffnung 20 einführbar ist, so dass der effektive Querschnitt der Gasauslassöffnung 20 variierbar ist. Die Düsennadel weist hierzu einen zylinderförmigen Abschnitt auf, welcher sich im ersten Endbereich 28 verjüngt. Vorzugsweise läuft der Endbereich 28 spitz zu. Der Endbereich kann jedoch gemäß weiteren Ausführungsformen auch abgerundet oder ebenfalls zylinderförmig sein. Die Gasauslassöffnung 20 ist vorzugsweise durch Einführen der Düsennadel 4 vollständig verschließbar.

Die Nachbrennkammer 1 ist über einen Schott 10 von einer Steuerkammer 2 getrennt. Zwischen dem Schott 10 und dem Gehäuse sind Dichtungen 25, 26 angeordnet. Eine Dichtungshalteplatte 15 ist mittels Dichtungshalteschrauben 16 mit dem Schott 10 verschraubt, wobei eine Düsennadeldichtung 13 an der Dichtungshalteplatte 15 befestigt ist. Die Düsennadel 4 ist durch die Düsennadeldichtung 13 und die Dichtungshalteplatte 15 hindurch in die Nachbrennkammer 1 eingeführt und axial verschiebbar, wobei die Nachbrennkammer 1 durch die Düsennadeldichtung 13 abgedichtet ist.

Die Triebwerkvorrichtung 100 weist weiter eine Ausgleichskammer 3 auf, wobei die Steuerkammer 2 in axialer Richtung zwischen der Nachbrennkammer 1 und der Ausgleichskammer 3 angeordnet ist. Zwischen der Ausgleichskammer 3 und der Steuerkammer 2 ist eine Zwischenkammer 30 angeordnet. Vorzugsweise sind die Ausgleichskammer 3 und/oder die Nachbrennkammer 1 symmetrisch um eine axiale Verschiebungsachse der Düsennadel 4 herum angeordnet.

Die Düsennadel 4 weist an einem zweiten Endbereich, welcher dem ersten Endbereich 28 axial entgegengesetzt ist, eine Kolbeneinrichtung 5 auf. Die Kolbeneinrichtung 5 umfasst einen ersten Abschnitt 29, welcher in der Ausgleichskammer 3 axial verschiebbar und formschlüssig angeordnet ist. Weiter umfasst die Kolbeneinrichtung 5 einen zweiten Abschnitt 7, welcher axial verschiebbar und formschlüssig in der Steuerkammer 2 angeordnet ist. Der erste Abschnitt 29 ist über eine Kolbenschraube 8 mit dem zweiten Abschnitt 7 der Kolbeneinrichtung 5 verbunden. Ein dritter Abschnitt 6 ist von der Nachbrennkammer 1 abgewandt und axial verschiebbar sowie formschlüssig in der Zwischenkammer 30 angeordnet. Zwischen dem zweiten Abschnitt 7 und dem dritten Abschnitt 6 der Kolbeneinrichtung 5 sind in einer radial äußeren Richtung Kolbendichtungen 9 eingeschlossen, welche einen fluidischen Kontakt der Steuerkammer 2 mit der Zwischenkammer 30 verhindern. Weitere Dichtungen 14 sind zwischen dem hinteren Gehäuseabschnitt 12 und einer zylindrischen Ausstülpung des dritten Abschnitts 6 der Kolbeneinrichtung 5 angeordnet, so dass die zylindrische Ausstülpung in der Ausgleichskammer 3 in axialer Richtung verschiebbar ist und gleichzeitig die Ausgleichskammer 3 gegenüber der Zwischenkammer 30 abgedichtet ist.

Die Zwischenkammer 30 ist über Entlüftungsöffnungen 21 fluidisch mit einer Umgebungsluft verbunden, so dass in der Zwischenkammer 30 ein neutraler Umgebungsdruck vorherrscht und die Düsennadel 4 in axialer Richtung in der Zwischenkammer 30 verschiebbar ist, ohne dass eine in der Zwischenkammer 30 befindliche Luft eine axiale Kraft auf die Düsennadel 4 ausübt.

Vorzugsweise ist die Nachbrennkammer 1 mit der Ausgleichskammer 3 fluidisch verbunden. So können die Ausgleichskammer 3 und die Nachbrennkammer 1 mit demselben Gasreservoir oder Gasgenerator verbunden sein oder die Nachbrennkammer 1 und die Ausgleichskammer 3 können über eine Fluidleitung bzw. Gasleitung miteinander verbunden sein.

Die Kolbeneinrichtung 5 weist einen Sensoranschluss 17 auf, welcher mit einer Sensoreinrichtung verbindbar bzw. verbunden ist, welche ebenfalls Teil der Triebwerkvorrichtung 100 sein kann. Die Sensoreinrichtung kann mittels Schrauben an einem Schraubenloch 23 des hinteren Gehäuseabschnittes 12 verschraubt und daran befestigt werden. Die Sensoreinrichtung ist dazu ausgebildet, eine axiale Position der Düsennadel 4 zu messen.

Weiter weist die Nachbrennkammer 1 einen Anschluss 18 auf, welcher mit einem Druck-/Temperaturmesswandler verbindbar bzw. verbunden ist, welcher ebenfalls Teil der Triebwerkvorrichtung 100 sein kann. Der Druck-/Temperaturmesswandler ist dazu ausgebildet, einen Druck bzw. eine Temperatur in der Nachbrennkammer 1 zu messen. Weiter weist die Steuerkammer 2 einen Anschluss 19 auf, welcher mit einem Druck-/Temperaturmesswandler verbindbar oder verbunden ist, welcher mit dem an den Anschluss 18 der Nachbrennkammer 1 angeschlossenen Druck-/Temperaturmesswandler identisch sein kann oder von diesem verschieden sein kann. Der Druck-/Temperaturmesswandler ist dazu ausgebildet, einen Druck bzw. eine Temperatur in der Steuerkammer 2 zu messen und kann ebenfalls Teil der Triebwerkvorrichtung 100 sein.

Ein in der Ausgleichskammer 3 befindliches Gas beaufschlagt den ersten Abschnitt 29 der Kolbeneinrichtung 5 derart mit Druck, dass die Düsennadel 4 eine in Figur 5 eingezeichnete axiale Ausgleichskraft F_{A} in Richtung der Gasauslassöffnung 20 der Nachbrennkammer 1 erfährt. Aufgrund des Luftstroms durch die Gasauslassöffnung 20 der Nachbrennkammer 1 wird der erste Endbereich 28 der Düsennadel 4 ebenfalls mit Druck beaufschlagt, so dass eine Luftkraft F_{L} von der Gasauslassöffnung 20 weg auf die Düsennadel 4 ausgeübt wird. Die Ausgleichskammer ist vorzugsweise derart dimensioniert, das heißt eine Größe und/oder geometrische Form der Ausgleichskammer ist derart gewählt, dass die Ausgleichskraft F_{A} bei vollständig zurückgefahrener Düsennadel, das heißt in einer Position, in welcher die Düsennadel 4 maximal weit aus der Gasauslassöffnung 20 der Nachbrennkammer 1 herausbewegt ist, größer als die Luftkraft F_{L} ist. Dadurch entsteht in diesem Fall eine effektive Kraft in Richtung der Gasauslassöffnung 20.

Die Steuerkammer 2 weist eine Gasöffnung 24 auf, über welche Gas in die Steuerkammer 2 einleitbar bzw. ausleitbar ist. Durch Einleiten eines Gases über die Gasöffnung 24 in die Steuerkammer 2 kann eine Steuerkraft F_{S} auf die Düsennadel 4 erzeugt werden, welche durch den Gasdruck des Gases in der Steuerkammer 2 entsteht und von der Gasauslassöffnung 20 weg zeigt. Der Zu- und Abstrom des Gases in die Steuerkammer 2 kann durch zwei 2/2-Wege-Ventil oder ein 3/3-Wege-Ventil erfolgen.

Die Triebwerkvorrichtung 100 weist vorzugsweise weiter eine (nicht gezeigte) Steuereinrichtung auf, welche dazu ausgebildet ist, die axiale Position der Düsennadel 4 durch Verändern eines Gasdrucks eines in der Steuerkammer 2 befindlichen Gases einzustellen. Vorzugsweise ist die Steuereinrichtung mit der Sensoreinrichtung verbunden und empfängt von der Sensoreinrichtung eine aktuelle axiale Position der Düsennadel 4. Basierend auf der aktuellen axialen Position der Düsennadel 4 erhöht oder erniedrigt die Steuereinrichtung den Gasdruck des in der Steuerkammer 2 befindlichen Gases solange, bis die von der Sensoreinrichtung gemessene aktuelle axiale Position einer vorgegebenen Position entspricht. Durch Erhöhen des Gasdrucks des in der Steuerkammer 2 befindlichen Gases wird die Steuerkraft F_{S}, welche von der Gasauslassöffnung 20 weg zeigt, erhöht, so dass durch Erhöhen des Gasdrucks des Gases die Düsennadel 4 weiter aus der Gasauslassöffnung 20 heraus verschoben werden kann. Umgekehrt kann die Steuereinrichtung durch Verringern des Gasdrucks des in der Steuerkammer 2 befindlichen Gases die Steuerkraft F_{S} verringern, so dass die Düsennadel 4 aufgrund der Ausgleichskraft F_{A} weiter in die Gasauslassöffnung 20 hinein bewegt bzw. eingeführt wird. Der effektive Querschnitt der Gasauslassöffnung 20 wird dadurch verringert. Die Steuereinrichtung ist somit dazu ausgelegt, die axiale Position der Düsennadel 4 kontinuierlich zu verändern.

Die Erfindung ist nicht auf die gezeigten Ausführungsbeispiele beschränkt. So kann gemäß weiteren Ausführungsformen die Steuereinrichtung darüber hinaus dazu ausgebildet sein, einen Druck eines Gases in der Ausgleichskammer 3 einzustellen. Vorzugsweise kann die Steuereinrichtung sowohl den Gasdruck des Gases in der Ausgleichskammer als auch den Gasdruck des Gases in der Steuerkammer 2 einstellen. Auch die Reihenfolge der Anordnung von Ausgleichskammer 3, Steuerkammer 2 und Nachbrennkammer 1 ist nicht auf die gezeigten Ausführungsformen beschränkt. So kann gemäß weiterer Ausführungsformen die Ausgleichskammer 3 zwischen der Steuerkammer 2 und der Nachbrennkammer 1 angeordnet sein.

### BEZUGSZEICHENLISTE

- 1: Nachbrennkammer
- 2: Steuerkammer
- 3: Ausgleichkammer
- 4: Düsennadel
- 5: Kolbeneinrichtung
- 6: dritter Abschnitt der Kolbeneinrichtung
- 7: zweiter Abschnitt der Kolbeneinrichtung
- 8: Kolbenschraube
- 9: Kolbendichtung
- 10: Schott
- 11: vorderer Gehäuseabschnitt
- 12: hinterer Gehäuseabschnitt
- 13: Düsennadeldichtung
- 14: Dichtung
- 15: Dichtungshalteplatte
- 16: Dichtungshalteschraube
- 17: Sensoranschluss
- 18: Nachbrennkammer-Anschluss an Druck-/Temperaturmesswandler
- 19: Steuerkammer-Anschluss an Druck-/Temperaturmesswandler
- 20: Gasauslassöffnung
- 21: Lüftungsöffnungen
- 22: Gehäuseschrauben
- 23: Schraubloch
- 24: Gasöffnung
- 25: Dichtung
- 26: Dichtung
- 27: Gaseinlassöffnungen
- 28: erster Endbereich der Düsennadel
- 29: erster Abschnitt der Kolbeneinrichtung
- 30: Zwischenkammer
- 100: Triebwerkvorrichtung

## Patentansprüche

1. Triebwerkvorrichtung (100) eines Raketentriebwerks, aufweisend:
eine Nachbrennkammer (1) mit einer Gaseinlassöffnung (27) zum Einströmen eines Gases in die Nachbrennkammer (1) und einer Gasauslassöffnung (20) zum Ausströmen des Gases;
eine mit Gas befüllbare Ausgleichskammer (3);
eine mit Gas befüllbare Steuerkammer (2); und
eine Düsennadel (4), welche axial verschiebbar derart angeordnet ist, dass ein erster Endbereich (28) der Düsennadel (4) zumindest teilweise in die Gasauslassöffnung (20) einführbar ist;
wobei die Düsennadel (4) an einem zweiten Endbereich eine Kolbeneinrichtung (5) aufweist, wobei ein erster Abschnitt (29) der Kolbeneinrichtung (5) in der Ausgleichskammer (3) angeordnet ist und durch ein in der Ausgleichskammer (3) befindliches Gas mit Druck derart beaufschlagbar ist, dass die Düsennadel (4) eine axiale Kraft in Richtung der Gasauslassöffnung (20) erfährt, wobei ein zweiter Abschnitt (7) der Kolbeneinrichtung (5) in der Steuerkammer (2) angeordnet ist und durch Einfüllen eines Gases in die Steuerkammer (2) mit Druck derart beaufschlagbar ist, dass die Düsennadel (4) eine axiale Kraft in Richtung von der Gasauslassöffnung (20) weg erfährt;
wobei die Nachbrennkammer (1) von der Steuerkammer (2) durch einen Schott (10) getrennt ist;
wobei die Steuerkammer (2) eine Gasöffnung (24) aufweist, über welche Gas in die Steuerkammer (2) einleitbar bzw. ausleitbar ist wobei die Kolbeneinrichtung (5) in einer zwischen der Steuerkammer (2) und der Ausgleichskammer (3) angeordneten Zwischenkammer (30) verschiebbar ist, wobei die Zwischenkammer (30) fluidisch mit einer Umgebungsluft verbunden ist.

2. Triebwerkvorrichtung (100) nach Anspruch 1, mit einer Steuereinrichtung, welche dazu ausgebildet ist, eine axiale Position der Düsennadel (4) durch Verändern eines Gasdrucks eines in der Steuerkammer (2) befindlichen Gases einzustellen.

3. Triebwerkvorrichtung (100) nach Anspruch 2, wobei die Steuereinrichtung weiter dazu ausgebildet ist, einen Gasdruck eines Gases in der Ausgleichskammer (3) einzustellen.

4. Triebwerkvorrichtung (100) nach einem der vorangehenden Ansprüche, mit einer Sensoreinrichtung, welche dazu ausgebildet ist, eine axiale Position der Düsennadel (4) zu messen.

5. Triebwerkvorrichtung (100) nach einem der vorangehenden Ansprüche, wobei die Nachbrennkammer (1) mit der Ausgleichskammer (3) fluidisch verbunden ist.

6. Triebwerkvorrichtung (100) nach einem der vorangehenden Ansprüche, wobei die Steuerkammer (2) in axialer Richtung zwischen der Ausgleichskammer (3) und der Nachbrennkammer (1) angeordnet ist.

7. Triebwerkvorrichtung (100) nach einem der vorangehenden Ansprüche, wobei die Ausgleichskammer (3) und/oder die Nachbrennkammer (1) symmetrisch um eine axiale Verschiebungsachse der Düsennadel herum angeordnet sind.

8. Triebwerkvorrichtung (100) nach einem der vorangehenden Ansprüche, wobei die Gasauslassöffnung (20) durch Einführen der Düsennadel (4) vollständig verschließbar ist.

## Claims

1. Engine device (100) of a rocket engine, comprising:
a secondary combustion chamber (1) comprising a gas inlet opening (27) for admitting a gas into the secondary combustion chamber (1) and a gas outlet opening (20) for expelling the gas;
a compensation chamber (3) fillable with gas;
a control chamber (2) fillable with gas; and
a jet needle (4), which is arranged axially displaceably in such a way that a first end region (28) of the jet needle (4) can be introduced at least in part into the gas outlet opening (20) ;
wherein the jet needle (4) has a piston means (5) on a second end region, a first portion (29) of the piston means (5) being arranged in the compensation chamber (3) and being loadable with pressure by way of a gas located in the compensation chamber (3) in such a way that the jet needle (4) experiences an axial force in the direction of the gas outlet opening (20), a second portion (7) of the piston means (5) being arranged in the control chamber (2) and being loadable with pressure by filling a gas into the control chamber (2) in such a way that the jet needle (4) experiences an axial force in the direction away from the gas outlet opening (20);
wherein the secondary combustion chamber (1) is separated from the control chamber (2) by a bulkhead (10);
wherein the secondary combustion chamber (2) has a gas opening (24) via which gas can be passed into and out of the control chamber (2);
wherein the piston means (5) is displaceable in an intermediate chamber (30) arranged between the control chamber (2) and the compensation chamber (3), the intermediate chamber (30) being fluidically connected to an ambient air.

2. Engine device (100) according to claim 1, comprising a control means configured to adjust an axial position of the jet needle (4) by changing a gas pressure of a gas located in the control chamber (2).

3. Engine device (100) according to claim 2, wherein the control means is further configured to adjust a gas pressure of a gas in the compensation chamber (3).

4. Engine device (100) according to any of the preceding claims, comprising a sensor means configured to measure an axial position of the jet needle (4).

5. Engine device (100) according to any of the preceding claims, wherein the secondary combustion chamber (1) is fluidically connected to the compensation chamber (3).

6. Engine device (100) according to any of the preceding claims, wherein the control chamber (2) is arranged between the compensation chamber (3) and the secondary combustion chamber (1) in an axial direction.

7. Engine device (100) according to any of the preceding claims, wherein the compensation chamber (3) and/or the secondary combustion chamber (1) are arranged symmetrically about an axial displacement axis of the jet nozzle.

8. Engine device (100) according to any of the preceding claims, wherein the gas outlet opening (20) can be fully sealed by introducing the jet nozzle (4).

## Revendications

1. Dispositif motopropulseur (100) d'une fusée, comportant :
une chambre de postcombustion (1) dotée d'une ouverture d'admission de gaz (27) destinée à faire entrer un gaz dans la chambre de postcombustion (1) et d'une ouverture de sortie de gaz (20) destinée à faire sortir le gaz ;
d'une chambre d'équilibrage (3) pouvant être remplie de gaz ; d'une chambre de pilotage (2) pouvant être remplie de gaz ; et
d'une aiguille d'injection (4), laquelle est disposée en coulissement axial de telle sorte qu'une première zone d'extrémité (28) de l'aiguille d'injection (4) peut être introduite au moins en partie dans l'ouverture de sortie de gaz (20) ;
dans lequel l'aiguille d'injection (4) comporte à une deuxième zone d'extrémité un dispositif de piston (5), dans lequel une première section (29) du dispositif de piston (5) est disposée dans la chambre d'équilibrage (3) et peut se voir appliquer une pression par un gaz se trouvant dans la chambre d'équilibrage (3) de telle sorte que l'aiguille d'injection (4) subit une force axiale vers l'ouverture de sortie de gaz (20), dans lequel une deuxième section (7) du dispositif de piston (5) est disposée dans la chambre de pilotage (2) et peut se voir appliquer une pression par remplissage la chambre de pilotage (2) par un gaz de telle sorte que l'aiguille d'injection (4) subit une force axiale l'éloignant de l'ouverture de sortie de gaz (20) ;
dans lequel la chambre de postcombustion (1) est séparée de la chambre de pilotage (2) par une cloison (10) ;
dans lequel la chambre de pilotage (2) comporte une ouverture de gaz (24), par le biais de laquelle du gaz peut être introduit dans et évacué de la chambre de pilotage (2) dans lequel le dispositif de piston (5) peut coulisser dans une chambre intermédiaire (30) disposée entre la chambre de pilotage (2) et la chambre d'équilibrage (3), dans lequel la chambre intermédiaire (30) est reliée fluidiquement à un air environnant.

2. Dispositif motopropulseur (100) selon la revendication 1, doté d'un dispositif de pilotage réalisé pour régler une position axiale de l'aiguille d'injection (4) par variation d'une pression d'un gaz se trouvant dans la chambre de pilotage (2).

3. Dispositif motopropulseur (100) selon la revendication 2, dans lequel le dispositif de pilotage est en outre réalisé pour régler une pression d'un gaz se trouvant dans la chambre d'équilibrage (3).

4. Dispositif motopropulseur (100) selon l'une des revendications précédentes, doté d'un dispositif de capteur, réalisé pour mesurer une position axiale de l'aiguille d'injection (4).

5. Dispositif motopropulseur (100) selon l'une des revendications précédentes, dans lequel la chambre de postcombustion (1) est reliée fluidiquement à la chambre d'équilibrage (3).

6. Dispositif motopropulseur (100) selon l'une des revendications précédentes, dans lequel la chambre de pilotage (2) est disposée entre la chambre d'équilibrage (3) et la chambre de postcombustion (1) dans la direction axiale.

7. Dispositif motopropulseur (100) selon l'une des revendications précédentes, dans lequel la chambre d'équilibrage (3) et/ou la chambre de postcombustion (1) sont disposées de façon symétrique autour d'un axe de coulissement axial de l'aiguille d'injection.

8. Dispositif motopropulseur (100) selon l'une des revendications précédentes, dans lequel l'ouverture de sortie de gaz (20) est complètement obturable par introduction de l'aiguille d'injection (4).
